# EUROPEAN PATENT SPECIFICATION

(11) **EP 2 441 562 B1**
(45) Date of publication and mention of the grant of the patent: **06.12.2017**
(21) Application number: 11008216.1
(22) Date of filing: 11.10.2011
(51) Int. Cl.: B29C 49/42, B29C 49/06

(54) **Operating method of blow molding apparatus**
Betriebsverfahren für Blasformvorrichtung
Procédé de fonctionnement d'appareil de moulage par soufflage

(30) Priority: 14.10.2010 JP 2010232013
(43) Date of publication of application: 18.04.2012
(73) Proprietor: Nissei Asb Machine Co., Ltd., Komoro-shi, Nagano-ken 384-8585 (JP)
(72) Inventor: Kobayashi, Takashi, Komoro-shi Nagano-ken 384-8585 (JP); Nishiyama, Atsushi, Komoro-shi Nagano-ken 384-8585 (JP)
(74) Representative: Wunderlich, Rainer

(56) References cited:
- CN-Y- 201 423 749
- DE-A1-102004 014 653
- DE-A1-102004 044 260
- JP-A- 9 085 812

## Description

### BACKGROUND

For example, a synthetic resin-made hollow container such as a plastic container is obtained by disposing a generally tubular parison or a bottomed cylindrical preform within a blow mold of a blow molding apparatus and by blow-molding the preform or the like within the blow mold through high pressure blown air. In addition, in recent years, as a plastic container, a polyethylene terephthalate (hereinafter, referred to as resin-made bottle, which is molded by stretch blowing, has come into widespread use. However, the PET resin-made container has disadvantages such as inferior heat resistance. In addition, in order to improve the heat resistance of the PET resin-made container, for example, a blow molding apparatus commonly called a two-blowing type or a three-blowing type, in which heat treatment blowing and final blowing each are performed in a separated blow mold, has also been used.

In general, any one of the above-described blow molding apparatuses is provided with various driving devices including an air cylinder device, and each driving device (air cylinder device) is driven by operating air having a lower pressure than that of the blow air.

In recent years, from the standpoint of economic efficiency or the environment, a plurality of technologies which recover high pressure blow air (exhaust air) after molding and reuse the recovered exhaust air as operating air has been suggested, for example in JP 9085812 A.

However, even though the exhaust air is reused as operating air while considering the number or size of the containers which are molded at one time, the operating air cannot be entirely provided by the exhaust air. In that case, it is necessary to pressurize and supply air to an operating air tank, in which the operating air is accumulated, by driving a compressor at a predetermined timing or the like. For example, in the apparatus disclosed in JP 9085812 A, if pressure of the operating air tank is gradually decreased during a plurality of molding cycles and the pressure of the operating air tank is a set pressure or less, a compressor is operated so as to maintain the pressure of the operating air tank at the set pressure. Thereby, operating air having sufficient pressure for driving various driving devices is secured in the operating air tank.

However, in the apparatus described in JP 9085812 A, even though various driving devices can be satisfactorily operated by reusing exhaust air, there is a concern that variation in quality of molded articles may occur in each molding cycle. Further blow molding methods and machines with a similar recovery of the blow air are known from DE 10 2004 044 260 A1 and DE 10 2004 014 653 A1.

As a result, the inventors obtained the knowledge that variation in quality of the molded articles is generated from the pressure of the operating air tank when the exhaust air is recovered. Specifically, the inventors found that a quantity of the exhaust air exhausted per unit time (exhaust air ratio) after the molding varies with respect to the pressure of a receiving tank (operating air tank) when the exhaust air is recovered and differences in the quality of the molded articles occur with respect to the exhaust air ratio.

This is achievable with the operating method of a blow molding apparatus according to claim 1.

According to the present invention, the operating method of the blow molding apparatus further includes increasing the pressure in the receiving tank until a first set pressure is reached by pressurizing and supplying air to the receiving tank from an air source just after the exhaust air is recovered until a saturation state is reached in the receiving tank.

According to the invention described above, the exhaust air can be effectively reused as operating air, and variation in the quality of the final molded article can be suppressed.

### BRIEF DESCRIPTION OF THE DRAWINGS

Illustrative aspects of the invention will be described in detail with reference to the following figures wherein:
Fig. 1 is a side view showing a blow molding apparatus according to a first embodiment;
Fig. 2 is a diagram showing a schematic configuration of the blow molding apparatus according to the first embodiment;
Fig. 3 is a flow chart showing an example of an operating method of the blow molding apparatus according to the first embodiment;
Fig. 4 is a graph showing a relationship between a pressure of a molded body and a receiving tank and elapsed time;
Fig. 5A and Fig. 5B are graphs showing a relationship between a pressure of a molded body and a receiving tank and elapsed time;
Fig. 6 is a flow chart showing an example of the operating method of the blow molding apparatus according to the first embodiment;
Fig. 7 is a block diagram showing a schematic configuration of a blow molding apparatus according to a second embodiment;
Fig. 8 is a view showing a molded article which is obtained in a manufacturing process of a hollow container; and
Fig. 9A and Fig. 9B are schematic cross-sectional views showing a first blow molding portion and a final blow molding portion according to the second embodiment.

### DETAILED DESCRIPTION OF EXEMPLARY EMBODIMENTS OF THE PRESENT INVENTION

Hereinafter, embodiments of the present invention will be described with reference to drawings.

### First Embodiment

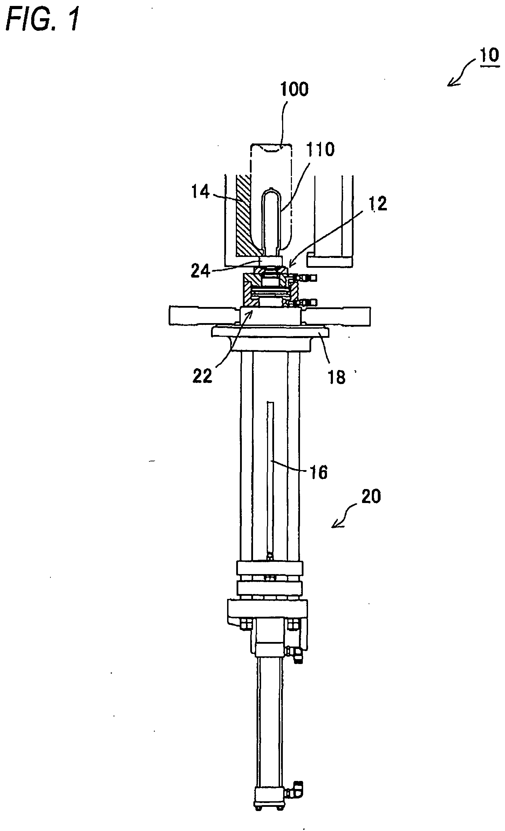

Fig. 1 is a side view showing a blow molding apparatus according to a first embodiment.

As shown in Fig. 1, a blow molding apparatus 10 is held to be inverted on a transporting member 12. For example, the blow molding apparatus blow-molds a preform (molded body) 110 constituted by PET resin or the like in a predetermined-shape hollow container 100. The blow molding apparatus 10 according to the present embodiment is a so-called biaxial stretch blow molding apparatus in which the preform 110 disposed in a blow cavity mold 14 is stretched by a stretching rod 16 along with blow air and a predetermined-shape hollow container is formed.

The blow cavity mold 14 is constituted by divided molds, and can be opened and closed or fastened on a base 18 by a blow mold fastening device (not shown). In addition, a bottom mold (not shown) is combined on the upper portion of the blow cavity mold 14.

In addition, in Fig. 1, a state where the left side-blow cavity mold 14 is closed and the right side-blow cavity mold 14 is opened is shown, in which the cross-section of the right side-blow cavity mold 14 is omitted.

The stretching rod 16 is held to a stretching rod lifting and lowering mechanism 20, and the stretching rod lifting and lowering mechanism 20 is configured so as to be able to lift and lower the stretching rod 16 by operating air. In addition, since the configuration of the stretching rod lifting and lowering mechanism 20 is known, the detailed description is omitted.

Moreover, as a guide member into which the stretching rod 16 penetrates and which guides the stretching rod 16 when it is lifted and lowered, a seal piston 22 is installed at the lower position of the transporting member 12. The seal piston 22 can be lifted and lowered by the operating air. In addition, a seal portion of the upper end abuts an opening of the preform 110 in a lower end of a disposition base 24 and the opening can be sealed, and the seal piston supplies the blow air into the blow cavity mold 14 (preform 110) from an air supply path formed in the inner portion at the time when the blow molding is performed.

Here, in the blow molding apparatus 10 according to the present embodiment, the used high pressure blow air (exhaust air) is recovered when the preform 110 is blow-molded, and the recovered air is reused as operating air to operate various driving devices included in the blow molding apparatus 10, for example, the stretching rod lifting and lowering device 20 and the seal piston 22 which are described above, or the like. In this way, economic efficiency can be enhanced by effectively using the exhaust air.

Hereinafter, the operating method of the blow molding apparatus 10, specifically, a recovering method of the exhaust air in the blow molding apparatus 10 will be described.

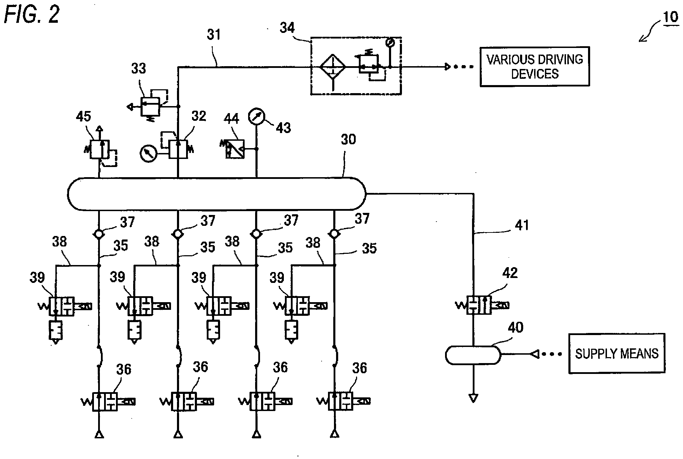

As shown in Fig. 2, the blow molding apparatus 10 according to the present embodiment includes a receiving tank 30 in which low pressure operating air is accumulated to operate the above-described various driving devices. That is, the receiving tank 30 is connected to various driving devices via a supply tube 31, and the operating air having a proper pressure is supplied to the various driving devices via the supply tube 31. For example, a first decompression valve 32 and a relief valve 33 are installed in the supply tube 31, and the operating air in the receiving tank 30 is decompressed to a set pressure by the first decompression valve 32 and the relief valve 33. Specifically, first, the operating air supplied from the receiving tank 30 to the supply tube 31 is decompressed to a set pressure which is preset by the first decompression valve 32. At this time, when the operating air is not sufficiently decompressed by the first decompression valve 32, a portion of the operating air is discharged from the relief valve 33 to the outside and the pressure of the operating air which flows to the supply tube 31 is decompressed to the set pressure.

In addition, in the present embodiment, a second decompression valve 34 is installed in the supply tube 31 which is downstream of the relief valve 33. The second decompression valve 34 functions in the case where the operating air is not decompressed to a set pressure by the first decompression valve 32 and the relief valve 33. That is, the second decompression valve 34 is preliminarily installed so as to more safely and reliably decompress to the set pressure. Therefore, if the operating air can be reliably decompressed to the set pressure by the first decompression valve 32 and the relief valve 33, the second decompression valve 34 need not be installed.

In addition, the above-described blow cavity mold 14 is connected to the receiving tank 30 via a recovery tube 35. Although not shown, four blow cavity molds 14 are installed in the present embodiment, and each blow cavity mold 14 is connected to the receiving tank 30 by the recovery tube 35. A recovery valve 36 and a check valve 37 are installed in each recovery tube 35. The check valve 37 is installed at a side further downstream (the receiving tank 30 side) than the recovery valve 36 in the recovery tube 35. Moreover, an exhaust valve 39 is connected between the recovery valve 36 and the check valve 37 in the recovery tube 35 via an exhaust tube 38.

Moreover, although described below in detail, due to the fact that the used high pressure blow air (exhaust air) is recovered from the blow cavity mold 14 to the receiving tank 30 via the recovery tube 35, the operating air which is consumed at various driving devices during the blow molding is replenished.

A blow air tank 40, in which high pressure blow air is accumulated, is connected to the receiving tank 30 by a communication tube 41 in order to blow-mold the preform 110. In addition, for example, a supply means such as a compressor is connected to the blow air tank 40, and the pressure in the blow air tank is always held within a predetermined range. For example, in the present embodiment, the pressure in the blow air tank is held within a range of 3.0 MPa to 3.5 MPa.

In addition, a supply valve 42 is installed in a communication tube 41 which connects the receiving tank 30 and the blow air tank 40, and the supply of air to the receiving tank 30 is controlled by opening and closing the supply valve 42. The opening and closing of the supply valve 42 is basically controlled according to the recovery condition of the exhaust air as described hereinafter. However, when the pressure in the receiving tank 30 is below the lower limit value, the supply valve 42 is forcedly operated and the pressure in the receiving tank 30 becomes a predetermined range. Specifically, a pressure gauge 43 which detects the pressure in the receiving tank 30 and a switch 44 which is operated according to the value for the receiving tank 30 which the pressure gauge 43 indicates are connected to the receiving tank 30, and the supply valve 42 is forcedly operated in conjunction with the switch 44. For example, in the present embodiment, if the pressure in the receiving tank 30 is below the lower limit value (1.0 MPa in the present embodiment), the switch 44 outputs a signal which is to turn on the supply valve 42. Thereby, the supply valve 42 is opened, and the blow air tank 40 and the receiving tank 30 are communicated with each other via the communication tube 41. Thereafter, if the pressure in the receiving tank 30 reaches an upper limit (2.3 MPa in the present embodiment), the switch 44 outputs a signal which is to turn off the supply valve 42. Thereby, the supply valve 42 is closed, and the communication between the blow air tank 40 and the receiving tank 30 is interrupted. In this way, due to the fact that the supply valve 42 is communicated with the switch 44, the pressure in the receiving tank 30 is held between the lower limit value and the upper limit value.

In addition, a relief valve 45, which is constituted so as to be opened if the pressure in the inner portion of the receiving tank 30 exceeds a predetermined value (for example, the upper limit value), is installed in the receiving tank 30. Thereby, even in the state where the pressure in the receiving tank 30 exceeds the upper limit value, large increase of the pressure can be suppressed. Therefore, the pressure in the receiving tank 30 can be more reliably held within a predetermined range.

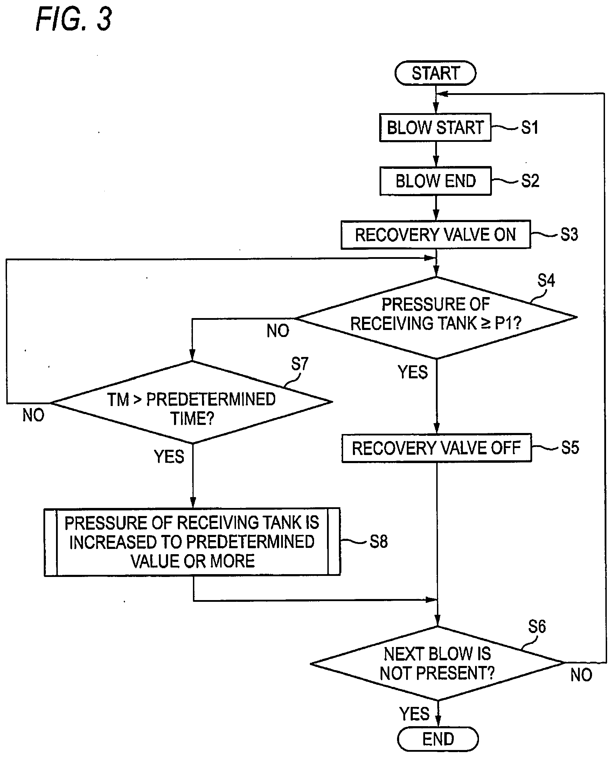

Next, the operating method of the blow molding apparatus 10 will be described with reference to the flow chart of Fig. 3.

If the preform 110, which is molded by an injection molding or the like, is disposed in the blow cavity mold 14, as shown in Fig. 3, first, the blowing starts in step S1. That is, high pressure blow air starts to be supplied from the blow air tank 40 to the blow cavity mold 14 (preform 110). At this time, the recovery valve 36, the exhaust valve 39, and the supply valve 42 are closed. Thereafter, the blowing ends if the preform 110 is formed in a predetermined shaped-hollow container 100 (step S2). That is, the supply of the blow air from the blow air tank 40 to the blow cavity mold 14 is stopped.

Subsequently, the recovery valve 36 is turned on in step S3. That is, the recovery valve 36 is opened at the same time when the supply of the blow air to the blow cavity mold 14 is stopped by an opening and closing valve (not shown) or the like, and the exhaust air discharged from the blow cavity mold 14 (hollow container 100) is recovered to the receiving tank 30 via the recovery tube 35.

In step S4, it is determined whether or not the pressure in the receiving tank 30 is a first set value P1 or more by the recovery of the exhaust air. Here, when the pressure in the receiving tank 30 is the first set value P1 or more (step S4: Yes), the recovery valve 36 is turned off in step S5 and the recovery of the exhaust air to the receiving tank 30 is stopped. In addition, at the same time when the recovery valve 36 is turned off, the exhaust valve 39 is turned on. In addition, after the blow air which remains in the blow cavity mold 14 is discharged to the outside, the blow cavity mold 14 is opened and the hollow container 100 is recovered. Thereafter, the process proceeds to step S6. Thus, when there is an object to be processed next (when there is a subsequent blowing) (step S6: No), is the process returns to step S1, and when there is no object to be processed next (step S6: Yes), the sequential processes end.

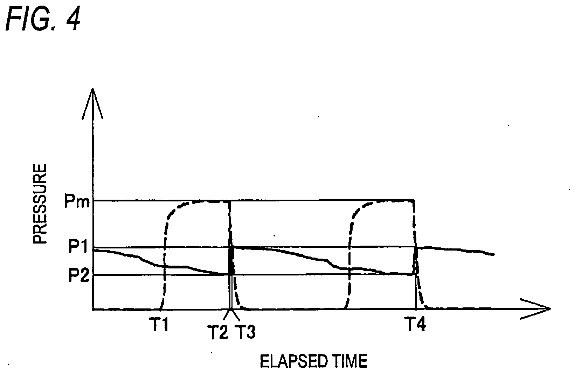

Here, the operating method of the blow molding apparatus 10 will be described with reference to the graph of Fig. 4. First, if supply of the blow air from the blow air tank 40 to the blow cavity mold 14 starts at a time T1, the pressure in the blow cavity mold 14 (preform 110) is gradually increased as shown by a dotted line in Fig. 4. If the pressure in the blow cavity mold 14 reaches a predetermined pressure Pm, the pressure is held for a constant time and the preform 110 is formed in a predetermined-shape hollow container 100. During the blow molding, the pressure in the receiving tank 30 is gradually decreased by operating various driving devices such as the stretch rod lifting and lowering mechanism 20 (refer to a solid-line in Fig. 4). If the blow molding ends (a time T2), the supply of the blow air is stopped and the recovery valve 36 is turned on. In addition, the pressure in the blow cavity mold 14 (hollow container 100) is drastically decreased. On the other hand, the pressure in the receiving tank 30 is drastically increased due to the fact that the exhaust air is recovered. In addition, if the recovery of the exhaust air ends (time T3), and the recovery valve 36 is turned off and transfer is made to the next molding cycle, the pressure in the receiving tank 30 is gradually decreased again due to the fact that various driving devices are operated until the next blow molding ends (until the recovery of the exhaust air starts).

Moreover, a consumption amount of the operating air in various driving devices is approximately constant in each molding cycle. That is, a reduction amount in the pressure of the receiving tank is approximately constant in each molding cycle. Therefore, if the pressure of the receiving tank 30 after the recovery of the exhaust air is constant in each molding cycle, the pressure in the receiving tank 30 is also approximately constant at the time of the starting of recovery of the exhaust air.

For example, as shown in Fig. 4, when the pressure in the receiving tank 30 reaches an approximately constant value (first set value P1) after the recovery of the exhaust air (a time T3), the pressure in the receiving tank 30 is an approximately constant value (second set value P2) at the time (a time T4) when the next recovery of the exhaust air starts.

Thereby, when the blow air of the blow cavity mold 14 (hollow container 100) is discharged in each molding cycle, a differential pressure between the pressure in the blow cavity mold 14 and the pressure in the receiving tank 30 is approximately constant. That is, an amount of the exhaust air (exhaust air ratio) which is discharged from the blow cavity mold 14 per unit time is approximately constant in each molding cycle. Therefore, variation in quality of the hollow container 100 is suppressed. In addition, the exhaust air can be efficiently used as operating air.

Moreover, the first set value P1 is not particularly limited. However, the first set value may be properly set according to the air amount which is needed in the operation of various driving devices during one molding cycle.

In addition, while the size of the hollow container, the number which is molded at one time, or the like have an effect, in some cases, the pressure in the receiving tank 30 does not increase to the first set value P1 solely according to the recovery of the exhaust air. The operation of various driving devices is not impeded even though the pressure in the receiving tank is not increased to the first set value P1. That is, if the pressure in the receiving tank 30 is between the upper limit value and the lower limit value described above, the operation of various driving devices is not impeded. In addition, for example, the lower limit value is set so as to be slightly lower than the second set value P2, and for example, the upper limit value is set so as to be slightly higher than the first set value P1.

However, in the case where the pressure in the receiving tank 30 is not increased to the first set value P1, the pressure in the receiving tank 30 at the time (time T2) when the recovery of the exhaust air starts is decreased for each molding cycle. That is, the pressure in the receiving tank 30 at the time when the recovery of the exhaust air starts is not an approximately constant value (second set value P2) in each molding cycle. Thereby, there is a concern that variation in quality of the hollow container which is molded in each molding cycle may occur.

Thus, in the present invention, in the time when the exhaust air is recovered until the exhaust air reaches a saturation state in the receiving tank 30, that is, in the time (time T3) when the recovery of the exhaust air ends, in the case where the pressure in the receiving tank 30 is not increased to the first set value P1, air is pressurized and supplied from an air source to the receiving tank 30 until the next recovery of the exhaust air starts, and the pressure in the receiving tank 30 is increased until a predetermined value is reached. Therefore, the pressure in the receiving tank 30 at the time (time T4) of the next starting of recovery of the exhaust air becomes approximately constant (second set value P2) in each molding cycle.

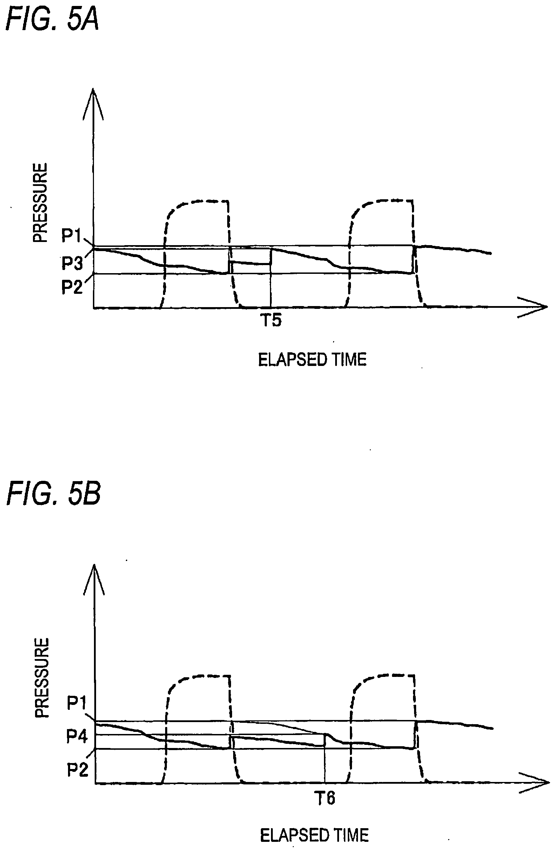

As shown in the flow chart of Fig. 3, in the case where the pressure in the receiving tank is less than the first set value P1 despite the recovery of the exhaust air in step S4 (step S4: No), the process proceeds to step S7, and it is determined whether or not elapsed time TM from the starting of recovery of the exhaust air (time T2) exceeds a predetermined time. In step S7, it is determined whether or not the exhaust air is recovered until the exhaust air reaches the saturation state in the receiving tank 30 based on the elapsed time TM. In the case where the elapsed time TM exceeds a predetermined time, the exhaust air is determined to be recovered until the exhaust air reaches the saturation state in the receiving tank 30 (step S7: Yes), and the process proceeds to step S8. In step S8, the pressure in the receiving tank 30 is increased so as to be a predetermined value or more in a predetermined timing until the next recovery of the exhaust air starts. That is, the pressure in the receiving tank in the predetermined timing is increased so as to reach the pressure of the receiving tank shown in a solid line in Fig. 4. For example, as shown in Fig. 5A, when the increase is performed at a predetermined timing (time T5), the pressure in the receiving tank 30 is increased until a predetermined value P3 is reached. In addition, for example, as shown in Fig. 5B, when the increase is performed at a predetermined timing (time T6), the pressure in the receiving tank 30 is increased until a predetermined value P4 is reached. Thereafter, the process proceeds to S6, and the process proceeds to step S1 if the object to be processed next is present (there is a subsequent blowing) (step S6: No) . In addition, the sequential processes end if the object processed next is not present (step S6: Yes).

In this way, due to the fact that the pressure in the receiving tank 30 is increased to a predetermined pressure, the pressure in the receiving tank 30 at the time when the recovery of the exhaust air starts becomes an approximately constant value (second set value P2) at each molding cycle. Therefore, variation in quality of the hollow container 100 which is molded in each molding cycle as described above can be suppressed.

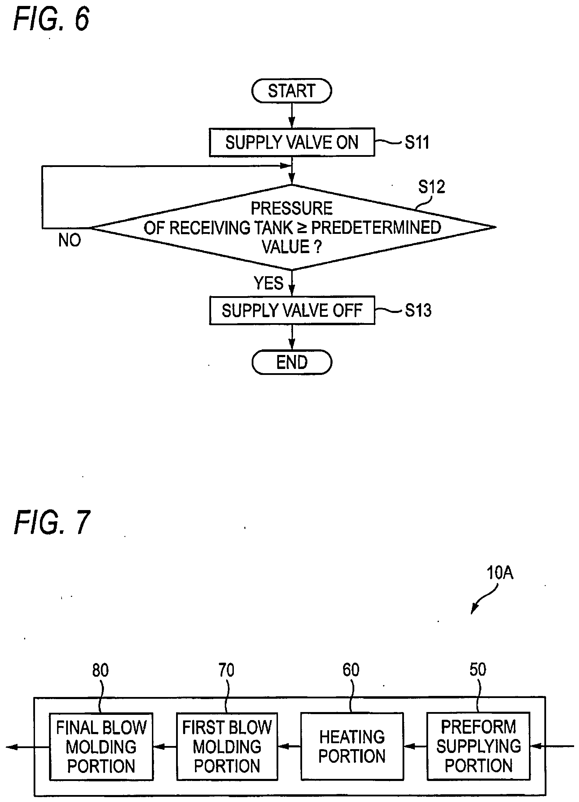

Moreover, the method in which the pressure in the receiving tank 30 is increased to a predetermined value in step S8 is not particularly limited. For example, in the present embodiment, the pressure in the receiving tank 30 is increased until a predetermined value is reached due to the fact that air is pressurized and supplied from the blow air tank 40 which is an air source for the receiving tank 30. Specifically, as shown in the flow chart of Fig. 6, the supply valve 42 is turned on in step S11. Thereby, high pressure air in the blow air tank 40 is supplied to the receiving tank 30, and the pressure in the receiving tank 30 is increased. In step S12, it is determined whether or not the pressure in the receiving tank 30 has increased to a predetermined value, and the supply valve 42 is turned off (step S13) at the time (step S12: Yes) when the pressure in the receiving tank 30 has increased to a predetermined value.

In this way, if the timing when the pressure in the receiving tank 30 is increased in step S8 is present between the time when the recovery of the exhaust air ends and the time when the next recovery of the exhaust air starts, the timing is not particularly limited. However, it is preferable that the timing is present between the time when the recovery of the exhaust air ends and the time when the blow molding of the preform 110 starts. Particularly, it is preferable that the timing is present just after the exhaust air is recovered until the exhaust air in the receiving tank 30 reaches a saturation state, and the pressure in the receiving tank 30 is increased until the first set value P1 is reached. Thereby, the pressure in the receiving tank 30 is favorably increased without affecting the blow molding. Therefore, variation in quality of the hollow container 100 can be suppressed, and the exhaust air can be efficiently used as operating air.

In addition, in the present embodiment, the pressure in the receiving tank 30 is increased by using the blow air tank 40 as the air source. However, for example, a supply means such as a compressor is connected to the receiving tank 30, and the pressure in the receiving tank 30 may be increased by using the supply means as the air source.

### Second Embodiment

In the first embodiment, the hollow container 100 which is the final shape is formed by blow-molding the preform 110. However, in the present embodiment, after a first blow-molded article 120 which is an intermediate molded article is formed by blow-molding the preform 110, the first blow-molded article 120 is blow-molded again and formed in the hollow container 100 which is the final shape.

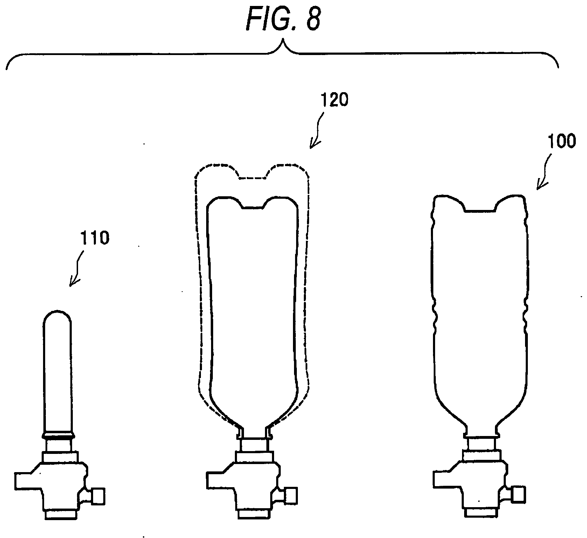

For example, a blow molding apparatus 10A according to the second embodiment is to manufacture a hollow container having a heat resistance. As shown in Fig. 7, the blowing molding apparatus 10A according to the second embodiment includes a preform supplying stage 50, a heating stage 60, a first blow molding stage 70, and a final blow molding stage 80. Moreover, as shown in Fig. 8, in the blow molding apparatus 10A, the hollow container 100 which is the final molded article is molded via the preform 110 and the first blow-molded article 120. In addition, a molded body described in the claims includes the preform 110 and the first blow-molded article 120.

The preform supplying stage 50 receives the preform 110 supplied from the outside of the blow molding apparatus and transports the supplied preform to the heating stage 60. The heating stage 60 heats the preform 110 to a proper molding temperature using a heater. The preform 110 heated to a predetermined temperature is transported to the first blow molding stage 70.

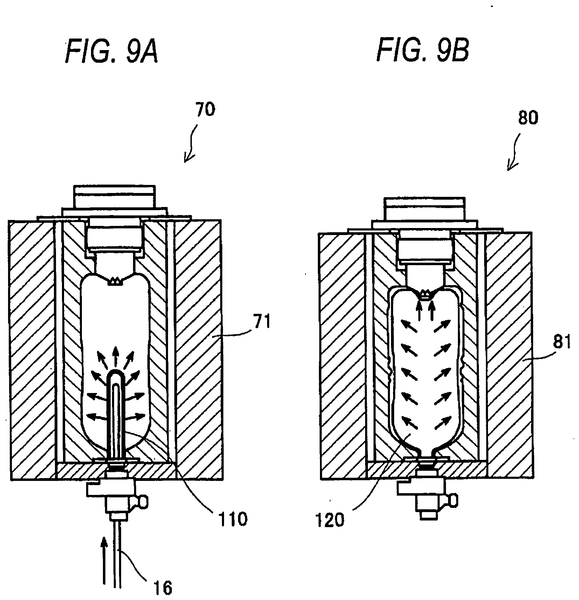

In the first blow molding stage 70, due to the fact the preform disposed in a mold of a first blow molding is subjected to a biaxial stretch blow molding, first blow-molded articles, which have approximately similar size to or slightly greater size than that of the hollow container 100 which is the final molded article, are formed (a first blow molding process). Specifically, as shown in Fig. 9A, the preform 110 heated by a predetermined proper stretching temperature is disposed in a mold 71 of a first blow molding, high pressure blow air is supplied into the mold 71 of the first blow molding (preform 110), and the preform 110 is stretched in the longitudinal axis direction by the stretching rod 16. Thereby, the first blow-molded articles 120, which have approximately the same size or slightly greater size than that of the hollow container 100 which is the final molded article, are formed (refer to Fig. 8).

In addition, in the first blow molding stage 70, since the mold 71 of the first blow molding is heated, the first blow-molded article 120 is subject to a heat treatment (a heat treatment process). Specifically, the mold 71 of the first blow molding is heated in the state where high pressure blow air is provided to the first blow-molded article 120, the first blow-molded article 120 contacts the inner wall surface in the mold 71 of the first blow molding during a predetermined time and is subjected to the heat treatment (heat set treatment). In addition, after the blow air in the first blow-molded article 120 is discharged as the exhaust air, the first blow-molded article 120 is extracted from the mold 71 of the first blow molding.

In addition, in some cases, the first blow-molded article 120 is inflated to be slightly larger than the hollow container 100 which is the final molded article (shown as a dotted line in Fig. 8). However, after the first blow-molded article 120 is subjected to the above-described heat treatment, the first blow-molded article 120 is rapidly shrunk according to the internal stress just at the moment when the high pressure blow air is discharged (shown as a solid-line in Fig. 8). As a result, the full height of the first blow-molded article 120 is settled at a lower height than that of the hollow container. Thereafter, the first blow-molded article 120 is transported to the final blow molding stage 80.

In the final blow molding stage 80, due to the fact that the first blow-molded article 120, which is subjected to the heat treatment and shrunk, is blow-molded, the hollow container 100 which is the final molded article is formed. Specifically, as shown in Fig. 9B, the first blow-molded article 120 is disposed in a mold 81 of the final blow molding, and high pressure blow air is supplied to the mold 81 of the final blow molding (the first blow-molded article 120) in the state where the mold 81 of the final blow molding is heated to a predetermined temperature. Thereby, the first blow-molded article 120 is stretched in the longitudinal axis direction and the lateral axis direction, and is pressed to the inner wall surface of the mold 81 of the final blow molding and subjected to the heat treatment. Thus, the hollow container 100 which is the final molded article is molded (refer to Fig. 8).

In the hollow container 100 which is molded in the final blow molding stage 80 in this way, after the blow air of the inner portion is discharged as exhaust air, the hollow container is extracted from the mold 81 of the final blow molding, and for example, transported to a predetermined storage area by a transportation means such as a belt conveyor.

In addition, in the blow molding apparatus 10A of the present embodiment, reuse of the exhaust air as described in the first embodiment is performed in the first blow molding stage 70 and the final blow molding stage 80 respectively. That is, when the exhaust air is reused, in each first blow molding stage70 and final blow molding portion 80, the pressure in the receiving tank 30 at the time of the starting of recovery of the exhaust air is so as to be approximately constant (second set value P2) in each molding cycle.

Thereby, variation in quality of the hollow container 100 can be suppressed, and the exhaust air can be efficiently used as operating air. Particularly, after the heat treatment process, since variation in the quality of the first blow-molded article 120 easily occurs, in the case where the heat treatment is performed, variation in the quality of the hollow container which is the final molded article easily occurs. However, in the present embodiment, in the first blow molding stage 70, since the pressure in the receiving tank 30 at the time of recovering the exhaust air is set so as to be constant at each molding cycle, variation in the quality of the hollow container 100 can be effectively suppressed.

For example, the configuration of the above-described blow molding apparatus is only one example. That is, the present invention is not limited if the configuration is one which can recover the exhaust air. In the above-described embodiments, the present invention is described with the blowing molding apparatus adopting a so-called one-blowing type and a two-blowing type as an example. However, the present invention can be also applied to a blow molding apparatus adopting a so-called three-blowing type. In addition, in the above-described embodiments, the apparatus in which the biaxial stretch blow molding is performed in the state where the preform is inverted is described. However, the present invention is not limited to this, and can be also applied to an apparatus which performs a blow molding in the state where the preform is upright.

Moreover, in the second embodiment, the used high pressure blow air (exhaust air) is recovered in the first blow molding stage 70 and the final blow molding stage 80 respectively. However, if necessary, the recovery may be performed at any one of the first blow molding portion 70 and the final blow molding stage 80.

## Claims

1. An operating method of a blow molding apparatus (10) in which a molded body (110) made of resin material is blow-molded in a blow mold and a hollow container (100) is molded, wherein
- blow air accumulated in a blow air tank (40) is provided to the molded body received in the blow mold and the molded body is inflated to a predetermined shape, and
- exhaust air discharged from the molded body after blow molding is recovered to a receiving tank (30) and the recovered exhaust air is reused as operating air for operating various driving devices,
**characterized in that**
- if the pressure in the receiving tank (30) is at least a first set value P1, which is a pressure chosen according to the air amount which is needed in the operation of various driving devices during one molding cycle, by recovery of exhaust air, then recovery of the exhaust air to the receiving tank (30) is stopped,
- if the pressure in the receiving tank (30) is not increased to the set value P1 by recovery of exhaust air until a saturation state in the receiving tank (30) is reached, then air is pressurized and supplied from an air source to the receiving tank (30) until the next recovery of the exhaust air starts and the pressure in the receiving tank (30) is increased until a predetermined value is reached, so that the pressure in the receiving tank (30) is maintained to be approximately constant at a second set value P2 at the time when the recovery of the exhaust air starts in each molding cycle.

2. The operating method of the blow molding apparatus according to claim 1,
**characterized in that**
the pressure in the receiving tank (30) is increased until the first set pressure P1 is reached by pressurizing and supplying air to the receiving tank (30) from the air source just after the exhaust air is recovered until a saturation state is reached in the receiving tank (30).

## Patentansprüche

1. Betriebsverfahren für eine Blasformvorrichtung (10), in welcher ein geformter Körper (110) aus einem Kunststoffmaterial in einer Blasform blasgeformt und ein Hohlkörper (100) geformt wird, wobei
- Blasluft, welche sich in einem Blaslufttank (40) befindet, zu einem in der Blasform aufgenommenen geformten Körper geleitet und der geformte Körper zu einer vorgegebenen Form aufgeblasen wird, und
- Abluft, welche aus dem geformten Körper nach dem Blasformen entweicht, zu einem Aufnahmetank (30) rückgewonnen und die rückgewonnene Abluft als Betriebsluft zum Betreiben verschiedener Antriebseinrichtungen wiederverwendet wird,
**dadurch gekennzeichnet, dass**,
- wenn der Druck in dem Aufnahmetank (30) durch Rückgewinnen der Abluft zumindest einen ersten vorgegebenen Wert P1 erreicht, welcher ein Druck ist, der gemäß der Luftmenge gewählt ist, welche zum Betrieb der verschiedenen Antriebseinrichtungen während eines Formzyklus benötigt wird, dann wird das Rückgewinnen der Abluft zu dem Aufnahmetank (30) gestoppt,
- wenn der Druck in dem Aufnahmetank (30) durch Rückgewinnen von Abluft nicht bis zu dem vorgegebenen Wert P1 erhöht werden kann, bis ein Sättigungszustand in dem Aufnahmetank (30) erreicht ist, dann wird Luft unter Druck gesetzt und von einer Luftquelle dem Aufnahmetank (30) zugeführt, bis das nächste Rückgewinnen von Abluft beginnt, und der Druck in dem Aufnahmetank (30) wird erhöht, bis ein vorgegebener Wert erreicht wird, so dass der Druck in dem Aufnahmetank (30) näherungsweise konstant auf einem zweiten vorgegebenen Wert P2 zu dem Zeitpunkt gehalten wird, wenn die Rückgewinnung von Abluft in jedem Formzyklus beginnt.

2. Betriebsverfahren der Blasformvorrichtung nach Anspruch 1,
**dadurch gekennzeichnet,**
**dass** unmittelbar nachdem die Abluft rückgewonnen wird, bis ein Sättigungszustand in dem Aufnahmetank (30) erreicht ist, der Druck in dem Aufnahmetank (30) erhöht wird, bis der erste vorgegebene Druck P1 durch Unterdrucksetzen und Zuführen von Luft zu dem Aufnahmetank (30) aus der Luftquelle erreicht wird.

## Revendications

1. Procédé de fonctionnement d'un appareil de moulage par soufflage (10), dans lequel un corps moulé (110) réalisé en un matériau de résine est moulé par soufflage dans un moule de soufflage et un contenant creux (100) est moulé, dans lequel
- l'air de soufflage accumulé dans un réservoir d'air de soufflage (40) est fourni au corps moulé reçu dans le moule de soufflage et le corps moulé est gonflé en une forme prédéterminée, et
- l'air d'échappement évacué du corps moulé après le moulage par soufflage est récupéré dans un réservoir de réception (30) et l'air d'échappement récupéré est réutilisé comme air de fonctionnement pour faire fonctionner divers dispositifs d'entraînement,
**caractérisé en ce que**
- si la pression dans le réservoir de réception (30) est au moins une première valeur définie P1 qui est une pression choisie selon la quantité d'air qui est nécessaire au fonctionnement de divers dispositifs d'entraînement pendant un cycle de moulage, par récupération d'air d'échappement, la récupération de l'air d'échappement dans le réservoir de réception (30) est alors arrêtée,
- si la pression dans le réservoir de réception (30) n'est pas augmentée à la valeur définie P1 par récupération d'air d'échappement jusqu'à ce qu'un état de saturation dans le réservoir de réception (30) soit atteint, alors de l'air est pressurisé et fourni par une source d'air au réservoir de réception (30) jusqu'à ce que la prochaine récupération de l'air d'échappement commence et que la pression dans le réservoir de réception (30) ait augmenté jusqu'à ce qu'une valeur prédéterminée soit atteinte, de sorte que la pression dans le réservoir de réception (30) soit maintenue pour être approximativement constante à une seconde valeur définie P2 au moment où la récupération de l'air d'échappement commence dans chaque cycle de moulage.

2. Procédé de fonctionnement de l'appareil de moulage par soufflage selon la revendication 1, **caractérisé en ce que** la pression dans le réservoir de réception (30) est augmentée jusqu'à ce que la première pression définie P1 soit atteinte par pressurisation et fourniture d'air au réservoir de réception (30) par la source d'air juste après que l'air d'échappement est récupéré jusqu'à ce qu'un état de saturation soit atteint dans le réservoir de réception (30).
